# EUROPEAN PATENT SPECIFICATION

(11) **EP 0 554 998 B1**
(45) Date of publication and mention of the grant of the patent: **15.04.1998**
(21) Application number: 93300541.5
(22) Date of filing: 26.01.1993
(51) Int. Cl.: G06K 15/00, G06K 15/10

(54) **Image processing method and apparatus**
Verfahren und Vorrichtung zur Bildverarbeitung
Procédé et dispositif pour le traitement des images

(30) Priority: 29.01.1992 JP 13631/92; 13.01.1993 JP 3918/93
(43) Date of publication of application: 11.08.1993
(73) Proprietor: CANON KABUSHIKI KAISHA, Tokyo (JP)
(72) Inventor: Miyazaki, Yuki, c/o Canon Kabushiki Kaisha, Ohta-ku, Tokyo (JP)
(74) Representative: Beresford, Keith Denis Lewis

(56) References cited:
- EP-A- 0 397 200
- EP-A- 0 398 681
- EP-A- 0 457 534
- DE-A- 3 633 613
- GB-A- 2 218 233
- JP-A- 1 206 052

## Description

The present invention relates to an image processing method and apparatus, and more particularly, to an image processing method and apparatus having a function where data received from a host computer is overlaid on a pre-registered standardized form to generate a new image data.

Recently, outline font has been widely employed as a font in order to generate character pattern corresponding to character code data.

Main features of the outline font exist on easiness of character processing and fineness of the generated character pattern. However, there is a drawback that the time required to generate a character pattern employing the outline font is longer than that taken in a method of employing a dotted pattern font. In order to reduce the processing time, a once-generated character pattern as a dot-pattern is registered in a cache memory for the next usage. When the same code is inputted, the registered character pattern is read out of the cache memory. In this manner, time for generating the dot character pattern is saved.

The above method controls available spaces in the cache memory in accordance with access frequencies of the registered character patterns. More specifically, when the cache memory becomes full, one character pattern of the lowest access frequency is deleted to create an available space for registration of a new character pattern.

However, in a case where an inputted data has to be overlaid on a pre-registered form data as e.g. known from JP-A-1 206 052 and the overlaid image is outputted, the above-mentioned conventional approach has dealt with all the data without consideration of the type of data such as an ordinary character data or character data for a form. In many cases, when the cache memory becomes full, a character data for a form might be deleted from the memory first because appearance frequency of the form character data is different from that of an ordinary character data. Thereafter, a deleted form character pattern should be read into the cache memory again upon form output. For example, a page printer employing the outline font re-reads a once-deleted form character data into its cache memory and generates a dot pattern, which takes more time in dot pattern formation at every page, increasing processing time by final image formation.

EP-A-0398681 discloses an image processing apparatus and method in accordance with the preamble of claims 1 and 11 wherein outline font data is stored and used to form dot-pattern data corresponding to data codes of data received for forming an image. Once the dot-pattern data has been formed it is stored in a cache memory means so that if it is used in the future it does not have to be reformed. Thus, when data codes are received, it is discriminated as to whether the corresponding dot-pattern data is present in the cache memory means. If it is it can be read out and used to form a bit map image. If the corresponding dot-pattern data is not present in the cache memory, the dot-pattern data is formed for using the formation of the bit map image and is also stored in the cache memory means for future use.

In accordance with one aspect, the present invention provides an image processing method comprising:
a first input step of inputting data corresponding to an image;
a first discrimination step of discriminating whether or not dot-pattern data corresponding to a respective data code inputted in said first input step is stored in a first cache memory;
a first mapping step of generating a dot-pattern in response to the data code of the first input data in the first cache memory using a stored and read outline font for the respective data codes, if the discrimination result in the first discrimination step is negative;
a first reading step of reading a dot-pattern from the first cache memory, if the discrimination result in said first discrimination step is positive;
an image mapping step of bit mapping the generated or read dot-patterns in a bit map memory; and
an output step of outputting the bit mapped pattern;
characterised by
a second input step of inputting data corresponding to a form image over which said image is to be overlaid;
a second discrimination step of discriminating whether or not the dot-pattern data corresponding to a respective form code input in said second input step is stored in a second cache memory;
a second mapping step of generating a dot-pattern in response to the form code of the second input data in the second cache memory using a stored and read outline font for the respective form code, if the discrimination result in said second discrimination step is negative; and
a second reading step of reading a dot-pattern from said second cache memory, if the discrimination result in said second discrimination step is positive;
wherein said image mapping step comprises
bit mapping the dot-patterns corresponding to the data codes and the form codes generated in said first and second mapping steps read in said first and second reading steps in a bit map memory to form an overlaid image of the image on the form image.

In accordance with a second aspect, the present invention provides image processing apparatus comprising
receiving means for receiving data corresponding to an image;
font memory means for storing outline font data;
first cache memory means for storing dot-pattern data corresponding to data codes of the data received by said receiving means;
forming means for discriminating whether or not dot-pattern data corresponding to a respective data code of the data received by said receiving means is stored in said first cache memory means, and if the result of the discrimination is positive, the forming means is adapted to read the dot-pattern from said first cache memory means, and if the result of the discrimination is negative, the forming means is adapted to generate a dot-pattern in response to the data code of the received data in said first cache memory means using the outline font data stored in said font memory means for the respective data code;
image forming means for forming a bit mapped image by bit mapping the generated or read dot-patterns; and
output means for outputting the bit mapped image;
characterised
in that said receiving means is adapted to receive form data corresponding to a form image over which said image is to be overlaid;
by second cache memory means for storing dot-pattern data corresponding to form codes of the form data received by said receiving means;
in that said forming means is adapted to discriminate whether or not the dot-pattern data corresponding to a respective form code of the form data received by said receiving means is stored in said second cache memory means, if the result of the discrimination is positive, the forming means is adapted to read the dot-pattern from said second cache memory means, and if the result of the discrimination is negative, the forming means is adapted to generate a dot-pattern in response to the form code of received form data in said second cache memory means using the outline font data stored in said font memory means for the respective form code; and
in that said image forming means is adapted to form the bit mapped image by bit mapping the dot-patterns corresponding to the data codes and the form codes generated by said forming means or read from said first and second cache memory means.

Embodiments of the present invention will now be described with reference to the accompanying drawings, in which:
Fig. 1 is a block diagram showing a configuration of a printing apparatus as a typical embodiment of the present invention;
Figs. 2A and 2B are diagrams showing examples of output data;
Figs. 3A and 3B are diagrams showing data stored in cache memories according to the embodiment;
Figs. 4, 5 and 6 are flowcharts showing overlaying image formation and printing performed by a CPU 101 according to the embodiment;
Fig. 7 is a cross-sectional view showing the structure of the printing apparatus in Fig. 1;
Fig. 8 is a diagram showing data stored in a cache memory having another structure; and
Fig. 9 is a diagram showing a memory address space employed for memory allocation, both static and dynamic memories.

A printing apparatus which receives a data from a host computer and overlays an ordinary character data on a form to output the overlaid image data will be described in detail below.

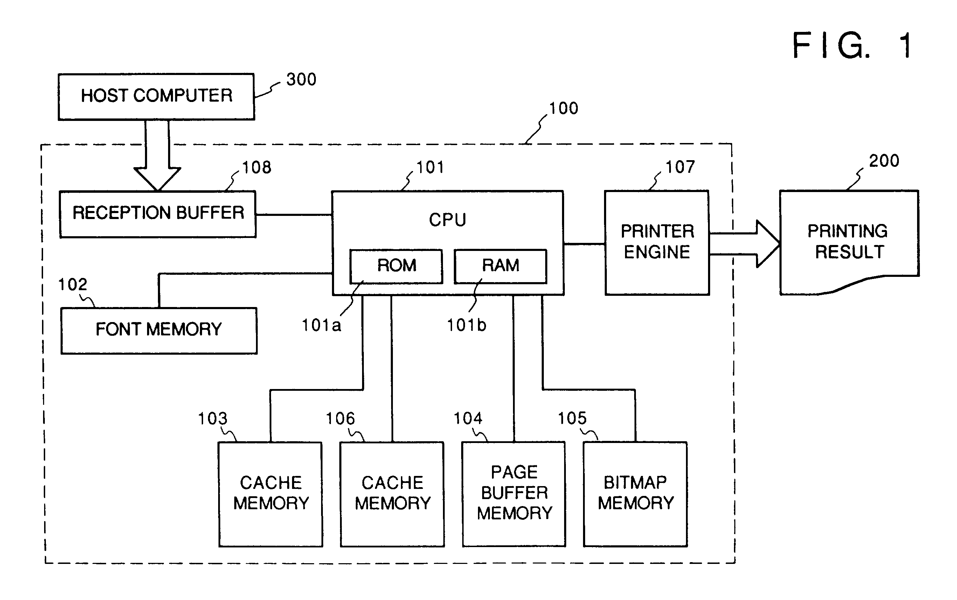

### <Configuration of Apparatus (Fig. 1)>

Fig. 1 shows a configuration of an printing apparatus according to an embodiment.

In Fig. 1, reference numeral 100 denotes a printer; 200, a printing result; and 300, a host computer which outputs printing data.

The printer 100 includes a CPU 101 having a ROM 101a and a RAM 101b and the following elements.

Reference numeral 108 denotes a reception buffer in which data from the host computer 300 is temporarily stored; 102, a font memory in which outline font data is stored; 103, a cache memory for form character data; 106, a cache memory for ordinary character data; 104, a page buffer memory in which received data is stored; 105, a bitmap memory for bitmapping of an image data for one page; and 107, a printer engine for actual printing process based on an image data bitmapped in the bitmap memory 105.

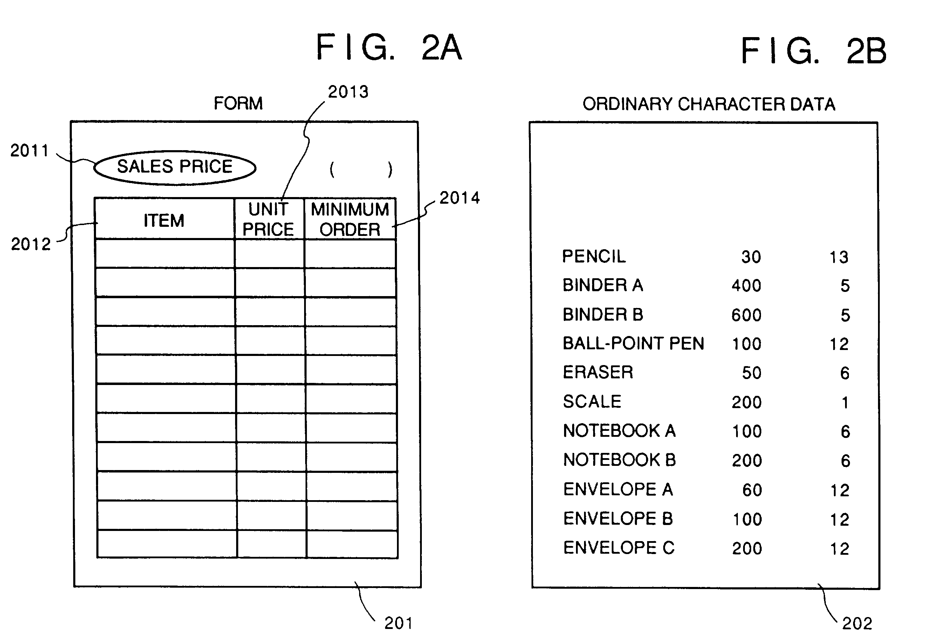

### <Character Data (Figs. 2A to 3B)>

Figs. 2A and 2B illustrate examples of data to be outputted by the printing apparatus according to the embodiment. In Figs. 2A and 2B, reference numeral 201 denotes a form data; and 202, an ordinary character data. Upon printing output, the ordinary character data 202 is overlaid on the form data 201 to form an output image data. In the form data 201, numeral 2011 to 2014 denote character data in the form.

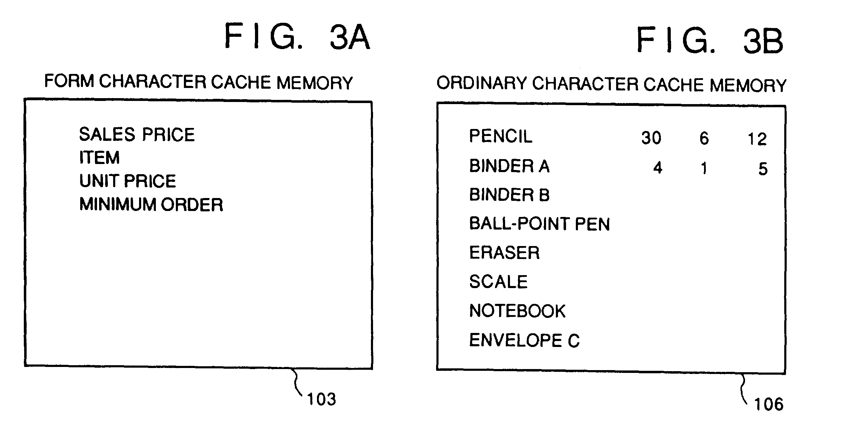

Figs. 3A and 3B illustrate character patterns registered in the cache memory 103 for form character data and the cache memory 106 for ordinary character data in case where the ordinary character data 202 is overlaid on the form data 201 and the overlaid image is outputted.

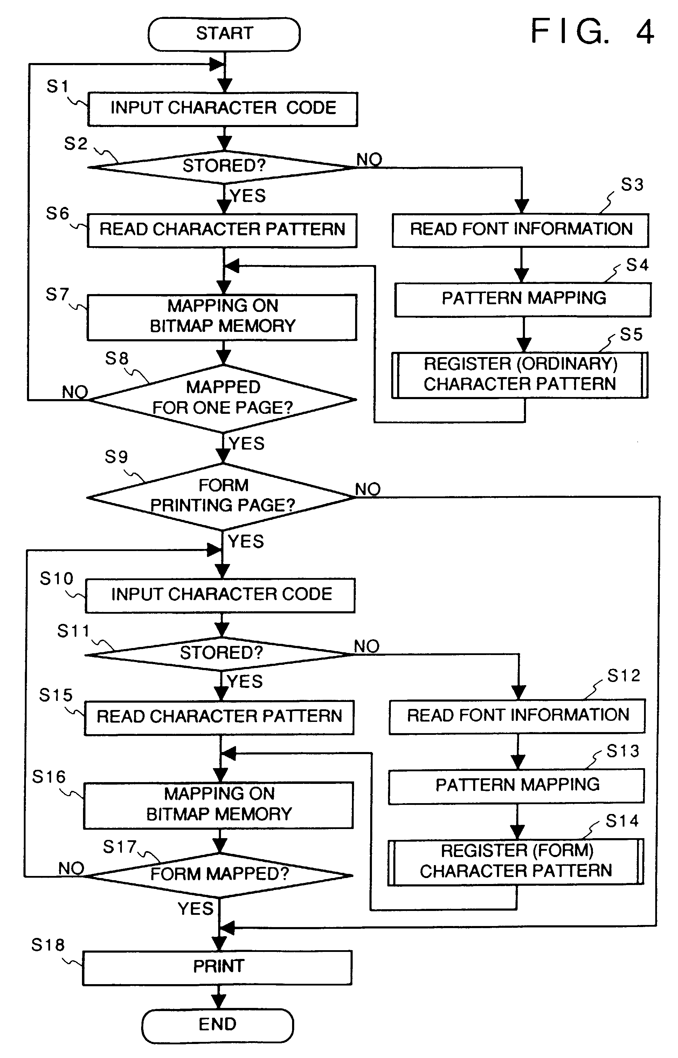

### <Flowcharts (Figs. 4 to 6)>

Figs. 4 to 6 are flowcharts showing printing processing by the CPU 101 when an image data is formed by overlaying an ordinary character data, such as the data 202, on a form data, such as the data 201, and the formed image data is outputted.

Data from the host computer 100 received in parallel with the overlaying image formation and printing is stored in the page buffer memory 104 via the reception buffer 108. The processing of the flowcharts of Figs. 4 to 6 start when printing data for one page is received and stored in the page buffer memory 104. It should be assumed that the form data 201 on each page, which will be overlaid, has been registered and stored in the RAM 101b in advance.

The outline of the image formation by overlaying an ordinary character data on a form data and printing output will be described below with reference to the flowchart of Fig. 4.

First, data for one character is read out of the page buffer memory 104 in step S1. Next, registered characters in the cache memory 106 for ordinary character data are searched to examine whether the character data read out in step S1 is stored or not in step S2.

If NO in step S2, i.e., it is determined that the character data is not stored, an outline data corresponding to the character code is read out of the font memory 102 in step S3, and the character pattern is generated based on the read outline data in step S4.

Thereafter, the character pattern is registered in the cache memory 106 in step S5.

On the other hand, if YES in step S2, i.e., it is determined that the character data is stored, a corresponding character pattern is read out of the cache memory 106 in step S6.

The obtained character pattern is mapped on the bitmap memory 105 in step S7.

In step S8, whether bitmapping of character patterns for one page is completed or not is examined, and the operations in steps S1 to S7 are repeated until it is determined that the bitmapping of character patterns for one page is completed. On the other hand, if it is determined that the bitmapping of character patterns for one page is completed, the process proceeds to steps S9. In step S9, whether the bitmapped data is a page specified to be overlaid on the pre-registered form data is examined.

If YES in step S9, data for one character is read out of the form data which has been received from the host computer 300 and stored in the RAM 101b via the reception buffer 108 in advance in step S10. In step S11, registered characters in the cache memory 103 for form character data are searched to examine whether the read character data is stored or not.

If NO in step S11, an outline data corresponding to the character data is read out of the font memory 102 in step S12. In step S13, a character pattern is generated based on the outline data and outputted into the RAM 101b, and the character pattern is registered in the cache memory 103 in step S14.

If YES in step S11, the corresponding character pattern is read out of the cache memory 103 in step S15.

The obtained character pattern corresponding to the character data is mapped on the bitmap memory 105 in step S16. In step S17, whether the bitmapping of form data is completed or not is examined, and the operations in steps S10 to S16 are repeated until it is determined that the bitmapping of the form data is completed, at which time the process proceeds to step S18 to perform printing output.

In step S9, if it is determined that the bitmapped data is not a page specified to be overlaid on the form data, the process proceeds to step S18, in which the image data in the bitmap memory 105 is outputted into the printer engine 107 to perform printing output.

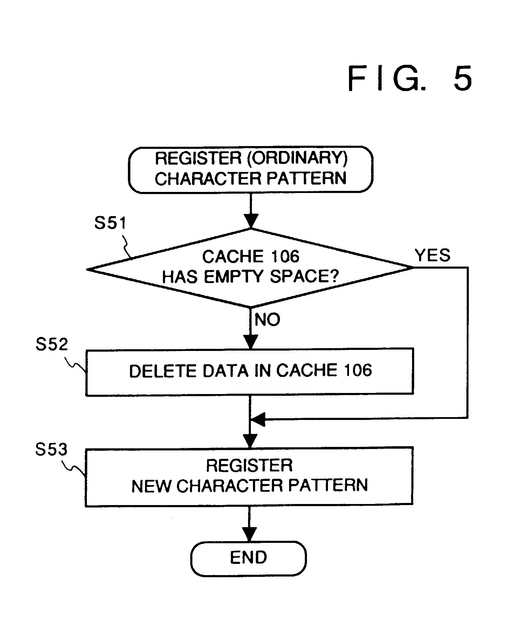

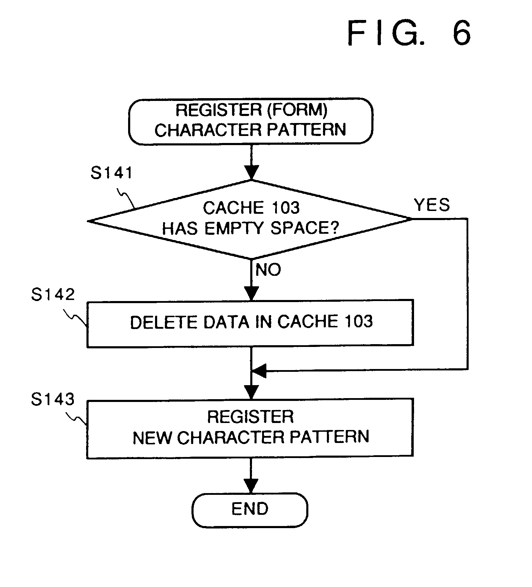

Next, the ordinary character pattern registration in step S5 will be described in detail with reference to the flowchart of Fig. 5, as well as description of the form character pattern registration in step S14 shown in the flowchart of Fig. 6.

In the registration of step S5, whether the cache memory has an empty space is examined before the pattern for one character is stored in the cache memory 106 in step S51. If NO, the least probable accessed data (=low priority data) is deleted from the pattern data pre-stored in the cache memory 106 in step S52. Access frequency of each pattern data is predicted based on such as the number of accesses and time elapsed from the previous access. In this manner, an empty space is ensured in the cache memory 106, then in step S53, the new character pattern is registered at the space.

It should be noted that the flowchart of Fig. 6 explaining the registration in step S14 corresponds to the flowchart of Fig. 5 except that the cache memory employed in the registration is the cache memory 103 for form character patterns, therefore, the explanation of the flowchart of Fig. 6 will be omitted.

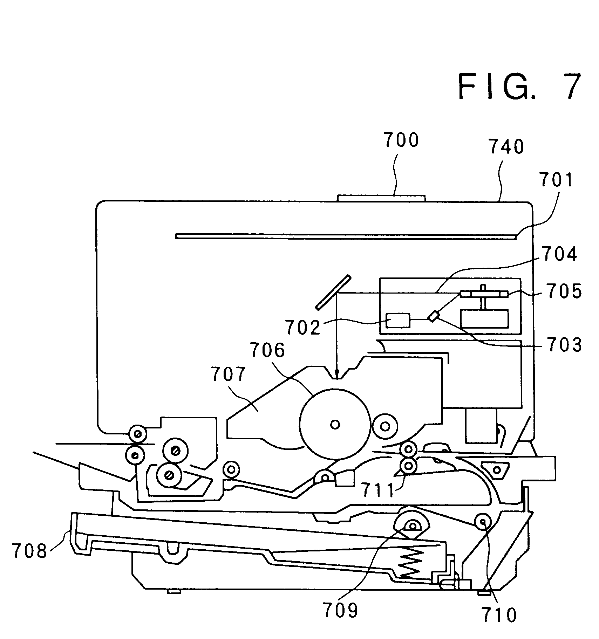

The printing output in step S18 is performed in the printer engine 107 (laser-beam printer hereinafter abbreviated to "LBP") shown in Fig. 7.

Fig. 7 is a sectional view showing the internal structure of a printer, containing the printer engine 107.

In Fig. 7, numeral 740 denotes a LBP main body which forms an image on a recording sheet as a recording medium, based on character patterns and the like supplied from the host computer 300; 700, a control panel on which various operating switches and LED(light emitting diode) displays and the like are arranged; and 701, a printer control unit for performing overall control of the LBP 740 and for analyzing data supplied from the host computer 300. The main unit 100 excluding the printer engine 107 shown in Fig. 1 is contained in the printing control unit 701.

A laser driver 702 is a circuit for driving a semiconductor laser unit 703. The laser driver 702 turns a laser beam 704 emitted from the semiconductor laser unit 703 to be on/off in accordance with the inputted video signal. A rotatable polygon mirror 705 reflects the laser beam 704 in a left-right direction so that the laser beam 704 scans on an electrostatic drum 706.

In this way, an electrostatic latent image such as a character pattern is formed on the electrostatic drum 706. A developing unit 707 arranged around the electrostatic drum 706 develops the latent image and transfer the image onto a recording sheet. The recording sheet is a cut-sheet type recording sheet set in a cassette 708 attached to the LBP 740. A paper feeding roller 709, document feeding rollers 710 and 711 convey the sheet into the LBP 740 and supply the sheet to the electrostatic drum 706.

In this manner, the given printing data is outputted on the recording sheet.

According to the embodiment, upon overlaying an ordinary character data on a form data and outputting the overlaid image data, cache memories separated and respectively dedicated for ordinary character data and character data for form is employed. When the cache memory 106 has no empty space for ordinary character registration, space should be created by deleting character data from the lowest priority data; this arrangement can prevent deletions of characters used for the form from the cache memory 103. Similarly, the arrangement can prevent deletions of ordinary characters from the cache memory 103 when it is out of empty space for character registration.

In this embodiment, the size of each cache memory space is not specified and it can be freely set. For example, when the cache memory 103 runs out of empty space, deletion can be performed from a character which has a mapping time of the shortest period, thus utilizing the cache memory effectively.

Upon search of a registered character pattern, if the character pattern is a character for form, the cache as the object of the search is the cache memory 103, while the object cache is the cache memory 106 if the character pattern is an ordinary character. However, it can be arranged such that both cache memories are searched.

It should be noted that the electrophotographic type printer is employed in this embodiment, however, the recording method is not taken into account as far as the printer uses an outline font. Further, the process described in the embodiment can be applied to a case where image output is not printing output.

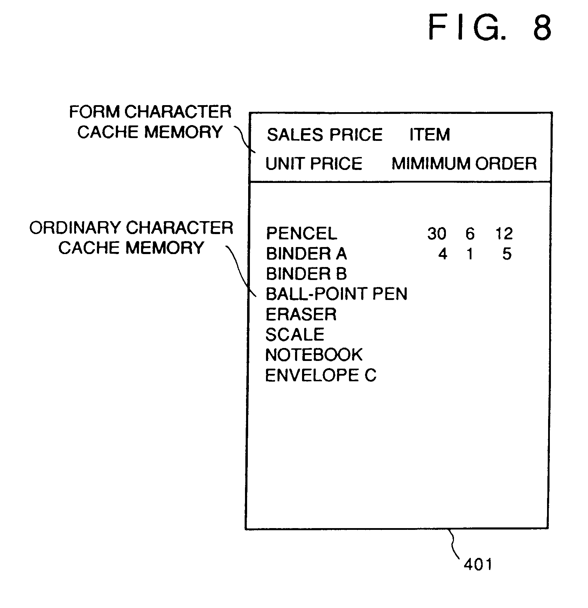

In the embodiment, the two cache memories respectively have a fixed size. However, the present invention is not limited to this arrangement. For example, it can be arranged, as described in Fig. 8, such that the sum of the memory sizes of the two cache memories is fixed and the ratio of the respective memory sizes is variable.

Fig. 8 illustrates a font cache memory 401 including a form character cache memory area and an ordinary character cache memory area. The sum of the two memory areas is constant and the sizes of respective areas are variable. In Fig. 8, data in Fig. 2A are employed as form characters and data in Fig. 2B are employed as ordinary characters overlaid on the form 201 in Fig. 2A. As for cache allocation, the form character cache memory area is reserved for the amount of the form character data at form printing starting time, and the other part of the memory 401 is allocated as an ordinary character cache memory area, and upon completion of the form printing or deletion of the form, the reserved area is released, thus effectively utilizing the memory.

Furthermore, it can be arranged such that the form character cache memory area is reserved and released at each form printing to utilize the memory more effectively. When a plurality of forms are registered or printed, a cache memory area can be reserved at each recording starting time, and it can be released at each completion of form printing or each deletion of form.

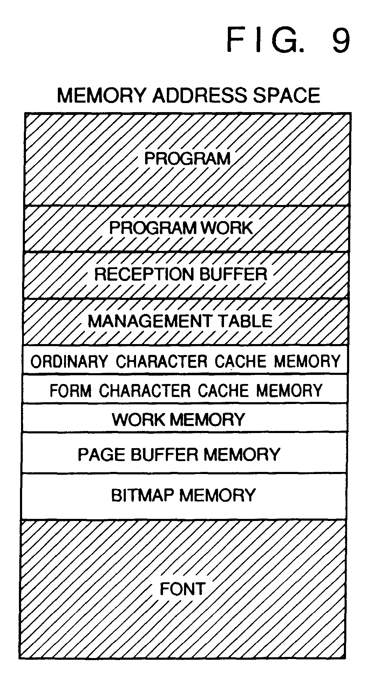

It is also possible to dynamically allocate memory spaces in dependence upon the amount of ordinary character data and that of form character data as for allocation of ordinary character cache memory area and form character cache memory area. Fig. 9 illustrates a memory address space used for static memory allocation and dynamic memory allocation. In Fig. 9, the hatched portion includes areas respectively having a fixed area size, i.e., a program storage area, a program work area, a reception buffer, a management table and a font storage area. These areas are allocated at initializing time of the apparatus. The other portion includes areas dynamically allocated in accordance with necessities, i.e., a bitmap memory, a page buffer memory, a work memory, an ordinary character cache memory area and a form character cache memory area.

According to this arrangement employing dynamically allocated areas, if the size of a recording sheet is small, the bitmap memory size can be small, which allows larger size allocation for the other memory spaces. Accordingly, an ordinary character cache memory area and form character cache memory area for large sized character data can be ensured for registration of more character patterns. Further, it can be arranged such that priorities of the areas to be dynamically allocated are set in advance, and if an empty memory area is insufficient, necessary memory size is deleted from the lowest priority area, e.g., the ordinary character cache memory area, and the deleted memory size is re-allocated to an area requiring the memory size. As described in the embodiment, the deletion is started from the area in which data of the lowest access frequency is stored. Note that it is possible to set the largest memory size and the smallest memory size with respect to each area for preventing deletion of important data or for effective utilization of memory.

The present invention can be applied to a system constituted by a plurality of devices, or to an apparatus comprising a single device. Furthermore, it goes without saying that the invention is applicable also to a case where the object of the invention is attained by supplying a program to a system or apparatus.

## Claims

1. An image processing method comprising:
a first input step (S1) of inputting data corresponding to an image (202);
a first discrimination step (S2) of discriminating whether or not dot-pattern data corresponding to a respective data code inputted in said first input step (S1) is stored in a first cache memory (106);
a first mapping step (S4) of generating a dot-pattern in response to the data code of the first input data in the first cache memory (106) using a stored and read outline font for the respective data codes, if the discrimination result in the first discrimination step is negative;
a first reading step (S6) of reading a dot-pattern from the first cache memory (106), if the discrimination result in said first discrimination step is positive;
an image mapping step (S7,S16) of bit mapping the generated or read dot-patterns in a bit map memory (105); and
an output step (S18) of outputting the bit mapped pattern;
characterised by
a second input step (S10) of inputting data corresponding to a form image (201) over which said image (202) is to be overlaid;
a second discrimination step (S11) of discriminating whether or not the dot-pattern data corresponding to a respective form code input in said second input step (S11) is stored in a second cache memory (103);
a second mapping step (S13) of generating a dot-pattern in response to the form code of the second input data in the second cache memory (103) using a stored and read outline font for the respective form code, if the discrimination result in said second discrimination step is negative; and
a second reading step (S15) of reading a dot-pattern from said second cache memory (103), if the discrimination result in said second discrimination step is positive;
wherein said image mapping step (S7,S16) comprises
bit mapping (S16) the dot-patterns corresponding to the data codes and the form codes generated in said first and second mapping steps (S4,S13) read in said first and second reading steps (S6,S15) in a bit map memory (105) to form an overlaid image of the image (202) on the form image (201).

2. An image processing method according to claim 1, wherein in said first mapping step (S4), whether or not the first cache memory (106) has sufficient space is examined, and if the space is insufficient, appropriate deletable data is deleted from dot-pattern data pre-stored in the first cache memory (106) to ensure sufficient space.

3. An image processing method according to claim 2, wherein the appropriate deletable data is a data of the lowest access frequency.

4. An image processing method according to claim 3, wherein the data of the lowest access frequency is determined based on a number of accesses within a predetermined time and/or time elapsed from the previous access.

5. An image processing method according to claim 1, wherein in said second mapping step (S13), whether or not the second cache memory (103) has sufficient space is examined, and if the space is insufficient, inappropriate deletable data is deleted from dot-pattern data pre-stored in the second cache memory (103) to ensure sufficient space.

6. An image processing method according to claim 5, wherein the appropriate deletable data is a data of the lowest access frequency.

7. An image processing method according to claim 6, wherein the data of the lowest access frequency is determined based on a number of accesses within a predetermined time and/or time elapsed from the previous access.

8. An image processing method according to any preceding claim, wherein the first and second cache memories (103,106) have a fixed memory capacity, wherein the fixed memory capacity is divided in dependence upon respective necessary memory information amounts.

9. An image processing method according to any preceding claim, including the step of separately and dynamically allocating memory areas of a storage medium to the first and second cache memories (103,106) in dependence upon respective necessary memory information amounts.

10. An image processing method according to claim 9 wherein said first and second cache memories (103,106) have priorities, and if the storage medium do not have sufficient space for newly storing the dot-pattern data, the lowest priority area of the storage medium is released.

11. Image processing apparatus comprising
receiving means (108) for receiving data corresponding to an image (202);
font memory means (102) for storing outline font data;
first cache memory means (106) for storing dot-pattern data corresponding to data codes of the data received by said receiving means (108);
forming means (101) for discriminating whether or not dot-pattern data corresponding to a respective data code of the data received by said receiving means (108) is stored in said first cache memory means (106), and if the result of the discrimination is positive, the forming means (101) is adapted to read the dot-pattern from said first cache memory means (106), and if the result of the discrimination is negative, the forming means is adapted to generate a dot-pattern in response to the data code of the received data in said first cache memory means (106) using the outline font data stored in said font memory means (102) for the respective data code;
image forming means (105) for forming a bit mapped image by bit mapping the generated or read dot-patterns; and
output means (107) for outputting the bit mapped image;
characterised
in that said receiving means (108) is adapted to receive form data corresponding to a form image (201) over which said image (202) is to be overlaid;
by second cache memory means (103) for storing dot-pattern data corresponding to form codes of the form data received by said receiving means (108);
in that said forming means (101) is adapted to discriminate whether or not the dot-pattern data corresponding to a respective form code of the form data received by said receiving means (108) is stored in said second cache memory means (103), if the result of the discrimination is positive, the forming means (101) is adapted to read the dot-pattern from said second cache memory means (103), and if the result of the discrimination is negative, the forming means (101) is adapted to generate a dot-pattern in response to the form code of received form data in said second cache memory means (103) using the outline font data stored in said font memory means (102) for the respective form code; and
in that said image forming means (105) is adapted to form the bit mapped image by bit mapping the dot-patterns corresponding to the data codes and the form codes generated by said forming means (101) or read from said first and second cache memory means (106,103).

12. Image processing apparatus according to claim 11, wherein if said forming means (101) discriminates that the dot-pattern data is not stored in said first cache memory means (106), said forming means (101) is adapted to examine whether said first cache memory means (106) has sufficient space for storing generated dot-pattern data, if this space is insufficient, said forming means (101) is adapted to delete appropriate deletable data from dot-pattern data pre-stored in said first cache memory means (106) to ensure sufficient space.

13. Image processing apparatus according to claim 12, wherein said forming means (101) is adapted to delete the data having the lowest access frequency.

14. Image processing apparatus according to claim 13, wherein said forming means (101) is adapted to determine data of the lowest access frequency based on a number of accesses within a predetermined time and/or time elapsed from the previous access.

15. Image processing apparatus according to claim 11, wherein if said forming means (101) discriminates that the dot-pattern data is not stored in said second cache memory means (103), said forming means (101) is adapted to examine whether said second cache memory means (103) has sufficient space, and if the space is insufficient, said forming means (101) is adapted to delete appropriate deletable data from dot-pattern data pre-stored in said second cache memory means (103) to ensure sufficient space.

16. Image processing apparatus according to claim 15 wherein said forming means (101) is adapted to delete data of the lowest access frequency.

17. Image processing apparatus according to claim 16, wherein said forming means (101) is adapted to determine the lowest access frequency based on a number of accesses within a predetermined time and/or time elapsed from the previous access.

18. Image processing apparatus according to any one of claims 11 to 17 wherein said first and second cache memory means (106,103) comprise a storage medium having a fixed memory capacity to be divided in dependence upon respective necessary information amounts.

19. Image processing apparatus according to any one of claims 11 to 18, wherein said output means (107) comprises an electrophotographic type printer.

20. Image processing apparatus according to any one of claims 11 to 17 wherein said first and second cache memory means (106,103) are separately and dynamically allocated memory areas of a storage medium in dependence upon respective necessary memory information amounts.

21. Image processing apparatus according to claim 20, wherein the first and second cache memory means (106,103) have priorities, and if the storage medium does not have sufficient space for newly storing the dot-pattern data, the lowest priority areas of the storage medium are released by the first and second cache memory means (106,103).

## Patentansprüche

1. Verfahren zur Bildverarbeitung mit
einem ersten Eingabeschritt (S1) des Eingebens von einem Bild (202) entsprechenden Daten,
einem ersten Unterscheidungsschritt (S2) des Unterscheidens, ob einem jeweiligen, in dem ersten Eingabeschritt (S1) eingegebenen Datencode entsprechende Punktmusterdaten in einem ersten Hilfsspeicher (106) gespeichert sind oder nicht,
einem ersten Abbildungsschritt (S4) des Erzeugens eines Punktmusters im Ansprechen auf den Datencode der ersten eingegebenen Daten in dem ersten Hilfsspeicher (106) unter Verwendung eines gespeicherten und gelesenen Umrißschrifttyps für die jeweiligen Datencodes, falls das Unterscheidungsergebnis bei dem ersten Unterscheidungsschritt negativ ist,
einem ersten Leseschritt (S6) des Lesens eines Punktmusters aus dem ersten Hilfsspeicher (106), falls das Unterscheidungsergebnis bei dem ersten Unterscheidungsschritt positiv ist,
einem Bildabbildungsschritt (S7, S16) der Bitmaskierung der erzeugten oder gelesenen Punktmuster in einem Bitmaskenspeicher (105) und
einem Ausgabeschritt (S18) des Ausgebens des bitmaskierten Musters,
**gekennzeichnet durch**
einen zweiten Eingabeschritt (S10) des Eingebens von einem Formularbild (201) entsprechenden Daten, über dem das Bild (202) zu überlagern ist,
einen zweiten Unterscheidungsschritt (S11) des Unterscheidens, ob die einem jeweiligen, bei dem zweiten Eingabeschritt (S11) eingegebenen Formularcode entsprechenden Punktmusterdaten in einem zweiten Hilfsspeicher (103) gespeichert sind oder nicht,
einen zweiten Abbildungsschritt (S13) des Erzeugens eines Punktmusters im Ansprechen auf den Formularcode der zweiten eingegebenen Daten in dem zweiten Hilfsspeicher (103) unter Verwendung eines gespeicherten und gelesenen Umrißschrifttyps für den jeweiligen Formularcode, falls das Unterscheidungsergebnis bei dem zweiten Unterscheidungsschritt negativ ist und
einen zweiten Leseschritt (S15) des Lesens eines Punktmusters aus dem zweiten Hilfsspeicher (103), falls das Unterscheidungsergebnis bei dem zweiten Unterscheidungsschritt positiv ist,
wobei der Bildabbildungsschritt (S7,S16)
Bitmaskieren (S16) der den Datencodes und den Formularcodes entsprechenden, bei den ersten und zweiten Abbildungsschritten (S4,S13) erzeugten und bei den ersten und zweiten Leseschritten (S6,S15) gelesenen Punktmuster in einen Bitmaskenspeicher (105) umfaßt, um ein überlagertes Bild des Bilds (202) auf dem Formularbild (201) auszubilden.

2. Verfahren zur Bildverarbeitung nach Anspruch 1,
**dadurch gekennzeichnet, daß**
bei dem ersten Abbildungsschritt (S4) geprüft wird, ob der erste Hilfsspeicher (106) ausreichend Speicherplatz aufweist oder nicht, wobei geeignete löschbare Daten von in dem ersten Hilfsspeicher (106) vorabgespeicherten Punktmusterdaten gelöscht werden, um ausreichend Speicherplatz sicherzustellen, falls der Speicherplatz nicht ausreicht.

3. Verfahren zur Bildverarbeitung nach Anspruch 2,
**dadurch gekennzeichnet, daß**
die geeignet löschbaren Daten Daten der kleinsten Zugriffsfrequenz sind.

4. Verfahren zur Bildverarbeitung nach Anspruch 3,
**dadurch gekennzeichnet, daß**
die Daten der kleinsten Zugriffsfrequenz beruhend auf einer Anzahl von Zugriffen innerhalb einer vorbestimmten Zeit und/oder der seit dem vorherigen Zugriff verstrichenen Zeit bestimmt werden.

5. Verfahren zur Bildverarbeitung nach Anspruch 1,
**dadurch gekennzeichnet, daß**
bei dem zweiten Abbildungsschritt (S13) geprüft wird, ob der zweite Hilfsspeicher (103) ausreichend Speicherplatz aufweist oder nicht, und falls der Speicherplatz nicht ausreicht, ungeeignete löschbare Daten von in dem zweiten Hilfsspeicher (103) vorabgespeicherten Punktmusterdaten gelöscht werden, um ausreichend Speicherplatz sicherzustellen.

6. Verfahren zur Bildverarbeitung nach Anspruch 5,
**dadurch gekennzeichnet, daß**
die geeigneten löschbaren Daten Daten der kleinsten Zugriffsfrequenz sind.

7. Verfahren zur Bildverarbeitung nach Anspruch 6,
**dadurch gekennzeichnet, daß**
die Daten der kleinsten Zugriffsfrequenz beruhend auf einer Anzahl von Zugriffen innerhalb einer vorbestimmten Zeit und/oder der seit dem vorherigen Zugriff verstrichenen Zeit bestimmt werden.

8. Verfahren zur Bildverarbeitung nach einem der vorangehenden Ansprüche,
**dadurch gekennzeichnet, daß**
die ersten und zweiten Hilfsspeicher (103,106) eine festgelegte Speicherkapazität aufweisen, wobei die festgelegte Speicherkapazität in Abhängigkeit von jeweilig notwendigen Speicherinformationsmengen aufgeteilt wird.

9. Verfahren zur Bildverarbeitung nach einem der vorangehenden Ansprüche,
**gekennzeichnet durch**
den Schritt des getrennten und dynamischen Zuweisens von Speicherbereichen eines Speichermediums zu den ersten und zweiten Hilfsspeichern (103,106) in Abhängikeit von jeweils notwendigen Speicherinformationsmengen.

10. Verfahren zur Bildverarbeitung nach Anspruch 9,
**dadurch gekennzeichnet, daß**
den ersten und zweiten Hilfsspeichern (103,106) Prioritäten zugewiesen sind, und falls das Speichermedium nicht ausreichend Speicherplatz für neues Speichern der Punktmusterdaten aufweist, der Speicherbereich mit der niedrigsten Priorität des Speichermediums freigegeben wird.

11. Bildverarbeitungsvorrichtung mit
einer Empfangseinrichtung (108) zum Empfangen von einem Bild (202) entsprechenden Daten,
einer Schrifttyp-Speichereinrichtung (102) zum Speichern von Umrißschrifttypdaten,
einer ersten Hilfsspeichereinrichtung (106) zum Speichern von Datencodes von den durch die Empfangseinrichtung (108) empfangenen Daten entsprechenden Punktmusterdaten,
einer Ausbildungseinrichtung (101) zur Unterscheidung, ob Punktmusterdaten, die einem jeweiligen Datencode der durch die Empfangseinrichtung (108) empfangenen Daten entsprechen, in der ersten Hilfsspeichereinrichtung (106) gespeichert sind oder nicht, wobei falls das Unterscheidungsergebnis positiv ist, die Ausbildungseinrichtung (101) die Punktmuster aus der ersten Hilfsspeichereinrichtung (106) liest, und falls das Unterscheidungsergebnis negativ ist, die Ausbildungseinrichtung ein Punktmuster im Ansprechen auf den Datencode der empfangenen Daten in der ersten Hilfsspeichereinrichtung (106) unter Verwendung der in der Schrifttyp-Speichereinrichtung (102) gespeicherten Umrißschrifttypdaten für den jeweiligen Datencode erzeugt,
einer Bilderzeugungseinrichtung (105) zur Erzeugung eines bitmaskierten Bilds durch Bitmaskierung der erzeugten oder gelesenen Punktmuster, und
einer Ausgabeeinrichtung (107) zur Ausgabe des bitmaskierten Bilds,
**dadurch gekennzeichnet, daß**
die Empfangseinrichtung (108) einem Formularbild (201) entsprechende Formulardaten empfängt, über dem das Bild (202) zu überlagern ist,
eine zweite Hilfsspeichereinrichtung (103) zum Speichern von Formularcodes der durch die Empfangseinrichtung (108) empfangenen Formulardaten entsprechende Punktmusterdaten vorhanden ist,
die zweite Ausbildungseinrichtung (101) unterscheidet, ob die einem jeweiligen Formularcode der durch die Empfangseinrichtung (108) empfangenen Formulardaten entsprechenden Punktmusterdaten in der zweiten Hilfsspeichereinrichtung (103) gespeichert sind oder nicht, wobei falls das Unterscheidungsergebnis positiv ist, die Ausbildungseinrichtung (101) die Punktmuster aus der zweiten Hilfsspeichereinrichtung (103) liest, und falls das Unterscheidungsergebnis negativ ist, die Ausbildungseinrichtung (101) ein Punktmuster im Ansprechen auf den Formularcode von empfangen Formulardaten in der zweiten Hilfsspeichereinrichtung (103) unter Verwendung der in der Schrifttyp-Speichereinrichtung (102) gespeicherten Umrißschrifttypdaten für den jeweiligen Formularcode erzeugt, und
die Bilderzeugungseinrichtung (105) das bitmaskierte Bild durch Bitmaskierung der Punktmuster erzeugt, die den durch die Ausbildungseinrichtung (101) erzeugten oder aus den ersten und zweiten Hilfsspeichereinrichtungen (106,103) gelesenen Datencodes und Formularcodes entsprechen.

12. Bildverarbeitungsvorrichtung nach Anspruch 11,
**dadurch gekennzeichnet, daß,**
falls die Ausbildungseinrichtung (101) unterscheidet, daß die Punktmusterdaten nicht in der ersten Hilfsspeichereinrichtung (106) gespeichert sind, die Ausbildungseinrichtung (101) prüft, ob die erste Hilfsspeichereinrichtung (106) ausreichend Speicherplatz zum Speichern erzeugter Punktmusterdaten aufweist, wobei die Ausbildungseinrichtung (101) geeignete löschbare Daten von in der ersten Hilfsspeichereinrichtung (106) vorabgespeicherten Punktmusterdaten löscht, um ausreichend Speicherplatz sicherzustellen, falls dieser Speicherplatz nicht ausreicht.

13. Bildverarbeitungsvorrichtung nach Anspruch 12,
**dadurch gekennzeichnet, daß**
die Ausbildungseinrichtung (101) die Daten mit der kleinsten Zugriffsfrequenz löscht.

14. Bildverarbeitungsvorrichtung nach Anspruch 13,
**dadurch gekennzeichnet, daß**
die Ausbildungseinrichtung (101) die Daten der kleinsten Zugriffsfrequenz beruhend auf einer Anzahl von Zugriffen innerhalb einer vorbestimmten Zeit und/oder der seit dem vorherigen Zugriff verstrichenen Zeit bestimmt.

15. Bildverarbeitungsvorrichtung nach Anspruch 11,
**dadurch gekennzeichnet, daß,**
falls die Ausbildungseinrichtung (101) unterscheidet, daß die Punktdaten nicht in der zweiten Hilfsspeichereinrichtung (103) gespeichert sind, die Ausbildungseinrichtung (101) prüft, ob die zweite Hilfsspeichereinrichtung (103) ausreichend Speicherplatz aufweist, und falls der Speicherplatz nicht ausreicht, die Ausbildungseinrichtung (101) geeignete löschbare Daten von in der zweiten Hilfsspeichereinrichtung (103) vorabgespeicherten Punktmusterdaten löscht, um ausreichend Speicherplatz sicherzustellen.

16. Bildverarbeitungsvorrichtung nach Anspruch 15,
**dadurch gekennzeichnet, daß**
die Ausbildungseinrichtung (101) Daten der kleinsten Zugriffsfrequenz löscht.

17. Bildverarbeitungsvorrichtung nach Anspruch 16,
**dadurch gekennzeichnet, daß**
die Ausbildungseinrichtung (101) die kleinste Zugriffsfrequenz beruhend auf einer Anzahl von Zugriffen innerhalb einer vorbestimmten Zeit und/oder der seit dem vorherigen Zugriff verstrichenen Zeit bestimmt.

18. Bildverarbeitungsvorrichtung nach einem der Ansprüche 11 bis 17,
**dadurch gekennzeichnet, daß**
die ersten und zweiten Hilfsspeichereinrichtungen (106,103) ein Speichermedium mit einer festgelegten Speicherkapazität aufweisen, die in Abhängigkeit von jeweilig notwendigen Informationsmengen aufzuteilen ist.

19. Bildverarbeitungsvorrichtung nach einem der Ansprüche 11 bis 18,
**dadurch gekennzeichnet, daß**
die Ausgabeeinrichtung (107) einen Drucker elektrophotographischer Bauart aufweist.

20. Bildverarbeitungsvorrichtung nach einem der Ansprüche 11 bis 17,
**dadurch gekennzeichnet, daß**
die ersten und zweiten Hilfsspeichereinrichtungen (106,103) in Abhängigkeit von jeweils notwendigen Speicherinformationsmengen getrennt und dynamisch zugewiesene Speicherbereiche eines Speichermediums sind.

21. Bildverarbeitungsvorrichtung nach Anspruch 20,
**dadurch gekennzeichnet, daß**
den ersten und zweiten Hilfsspeichern (106,103) Prioritäten zugewiesen sind, wobei falls das Speichermedium nicht ausreichend Speicherplatz für neues Speichern der Punktmusterdaten aufweist, Speicherbereiche mit der niedrigsten Priorität des Speichermediums durch die ersten und zweiten Hilfsspeichereinrichtungen (106,103) freigegeben werden.

## Revendications

1. Procédé de traitement d'image comprenant :
une première étape d'entrée (S1), pour l'introduction de données correspondant à une image (202) ;
une première étape de discrimination (S2), pour la discrimination du fait que des données de configuration de point, correspondant à un code de données respectif, introduites au cours de ladite première étape d'entrée (S1), sont ou non stockées dans une première antémémoire (106) ;
une première étape de mappage (S4), pour la génération d'une configuration de point en réponse au code de données des premières données introduites dans la première anté-mémoire (106) en utilisant une police de contour stockée et lue pour les codes de données respectifs, si le résultat de la discrimination au cours de la première étape de discrimination est négatif ;
une première étape de lecture (S6), de lecture d'une configuration de point à partir de la première antémémoire (106), si le résultat de la discrimination au cours de ladite première étape de discrimination est positif ;
une étape (S7, S16) de mappage d'image, pour le mappage binaire des configurations de points générées ou lues dans une mémoire (105) à mappage binaire ; et
une étape de sortie (S18), pour la délivrance de la configuration à mappage binaire ;
caractérisé par
une deuxième étape d'entrée (S10), pour l'introduction de données correspondant à une image de formulaire (201) sur laquelle ladite image (202) doit être superposée ;
une deuxième étape de discrimination (S11), pour la discrimination du fait que les données de configuration de point, correspondant à une entrée de code respectif de formulaire, au cours de ladite deuxième étape d'entrée (S11), sont ou non stockées dans une deuxième antémémoire (103) ;
une deuxième étape de mappage (S13), pour la génération d'une configuration de point en réponse au code de formulaire des deuxièmes données introduites dans la deuxième antémémoire (103) en utilisant une police de contour stockée et lue pour le code de formulaire respectif, si le résultat de la discrimination au cours de ladite deuxième étape de discrimination est négatif ; et
une deuxième étape de lecture (S15), pour la lecture d'une configuration de point à partir de ladite deuxième antémémoire (103), si le résultat de la discrimination au cours de ladite deuxième étape de discrimination est positif ;
dans lequel ladite étape (S7, S16) de mappage d'image comprend
un mappage binaire (S16) des configurations de points correspondant aux codes de données et aux codes de formulaire générés au cours desdites première et deuxième étapes de mappage (S4, S13) lus au cours desdites première et deuxième étapes de lecture (S6, S15) dans une mémoire (105) à mappage binaire, pour former une image superposée de l'image (202) sur l'image de formulaire (201).

2. Procédé de traitement d'image selon la revendication 1, dans lequel, au cours de la première étape de mappage (S4), le fait que la première antémémoire (106) a ou non suffisamment d'espace est examiné, et si l'espace est insuffisant, des données appropriées qui peuvent être supprimées sont supprimées de données de configuration de point pré-stockées dans la première antémémoire (106), pour assurer un espace suffisant.

3. Procédé de traitement d'image selon la revendication 2, dans lequel les données appropriées qui peuvent être supprimées sont des données de la fréquence d'accès la plus basse.

4. Procédé de traitement d'image selon la revendication 3, dans lequel les données de la fréquence d'accès la plus basse sont déterminées sur la base d'un nombre d'accès dans un temps prédéterminé et/ou un temps écoulé à partir de l'accès précédent.

5. Procédé de traitement d'image selon la revendication 1, dans lequel, au cours de ladite deuxième étape de mappage (S13), le fait que la deuxième anté-mémoire (103) a ou non suffisamment d'espace est examiné, et si l'espace est insuffisant, des données inappropriées pouvant être supprimées sont supprimées de données de configuration de point pré-stockées dans la deuxième anté-mémoire (103), pour assurer un espace suffisant.

6. Procédé de traitement d'image selon la revendication 5, dans lequel les données appropriées pouvant être supprimées sont des données de la fréquence la plus basse.

7. Procédé de traitement d'image selon la revendication 6, dans lequel les données de la fréquence d'accès la plus basse sont déterminées sur la base d'un nombre d'accès dans un temps prédéterminé et/ou un temps écoulé depuis l'accès précédent.

8. Procédé de traitement d'image selon l'une quelconque des revendications précédentes, dans lequel la première et la deuxième antémémoires (103, 106) ont une capacité de mémoire fixe, la capacité de mémoire fixe étant divisée en fonction de quantités respectives nécessaires d'information de mémoire.

9. Procédé de traitement d'image selon l'une quelconque des revendications précédentes, comportant l'étape d'attribution, de manière séparée et dynamique, de zones de mémoire d'un support d'enregistrement aux première et deuxième antémémoires (103, 106) en fonction de quantités respectives nécessaires d'information de mémoire.

10. Procédé de traitement d'image selon la revendication 9, dans lequel lesdites première et deuxième antémémoires (103, 106) ont des priorités, et si le support d'enregistrement n'a pas d'espace suffisant pour stocker à nouveau les données de configuration de point, la zone de priorité la plus basse du support d'enregistrement est libérée.

11. Appareil de traitement d'image comprenant
un moyen de réception (108) pour recevoir des données correspondant à une image (202) ;
un moyen (102) formant mémoire de police pour stocker des données de police de contour ;
un premier moyen (106) formant antémémoire pour stocker des données de configuration de point correspondant aux codes de données des données reçues par ledit moyen de réception (108) ;
un moyen de formation (101) pour discriminer si des données de configuration de point correspondant à un code respectif de données des données reçues par ledit moyen de réception (108) sont ou non stockées dans ledit premier moyen (106) formant antémémoire, et si le résultat de la discrimination est positif, le moyen de formation (101) est apte à lire la configuration de point à partir dudit premier moyen (106) formant antémémoire, et si le résultat de la discrimination est négatif, le moyen de formation est apte à générer une configuration de point en réponse au code de données des données reçues dans ledit premier moyen (106) formant antémémoire en utilisant les données de police de contour stockées dans ledit moyen (102) formant mémoire de police pour le code respectif de données ;
un moyen (105) de formation d'image pour former une image à mappage binaire par mappage binaire des configurations de points générées ou lues ; et
un moyen de sortie (107) pour délivrer l'image à mappage binaire ;
caractérisé
en ce que ledit moyen de réception (108) est apte à recevoir des données de formulaire correspondant à une image de formulaire (201) sur laquelle ladite image (202) doit être superposée ;
par un deuxième moyen (103) formant antémémoire pour stocker des données de configuration de point correspondant à des codes de formulaire des données de formulaire reçues par ledit moyen de réception (108) ;
en ce que ledit moyen de formation (101) est apte à discriminer si les données de configuration de point correspondant à un code de formulaire respectif des données de formulaire reçues par ledit moyen de réception (108) sont ou non stockées dans ledit deuxième moyen (103) formant antémémoire, si le résultat de la discrimination est positif, le moyen de formation (101) est apte à lire la configuration de point à partir dudit deuxième moyen (103) formant antémémoire, et si le résultat de la discrimination est négatif, le moyen de formation (101) est apte à générer une configuration de point en réponse au code de formulaire des données de formulaire reçues dans ledit deuxième moyen (103) formant antémémoire en utilisant les données de police de contour stockées dans ledit moyen (102) formant mémoire de police pour le code respectif de formulaire ; et
en ce que ledit moyen (105) de formation d'image est apte à former l'image à mappage binaire par mappage binaire des configurations de points correspondant aux codes de données et aux codes de formulaire générés par ledit moyen de formation (101) ou lus à partir desdits premier et deuxième moyens (106, 103) formant anté-mémoire.

12. Appareil de traitement d'image selon la revendication 11, dans lequel, si ledit moyen de formation (101) discrimine que les données de configuration de point ne sont pas stockées dans ledit premier moyen (106) formant antémémoire, ledit moyen de formation (101) est apte à examiner si ledit premier moyen (106) formant antémémoire a un espace suffisant pour stocker des données de configuration de point générées, et si l'espace est insuffisant, ledit moyen de formation (101) est apte à supprimer des données appropriées pouvant être supprimées des données de configuration de point pré-stockées dans ledit premier moyen (106) formant antémémoire, pour assurer un espace suffisant.

13. Appareil de traitement d'image selon la revendication 12, dans lequel ledit moyen de formation (101) est apte à supprimer les données ayant la fréquence d'accès la plus basse.

14. Appareil de traitement d'image selon la revendication 13, dans lequel ledit moyen de formation (101) est apte à déterminer des données de la fréquence d'accès la plus basse sur la base d'un nombre d'accès dans un temps prédéterminé et/ou un temps écoulé à partir de l'accès précédent.

15. Appareil de traitement d'image selon la revendication 11, dans lequel, si ledit moyen de formation (101) discrimine que les données de configuration de point ne sont pas stockées dans ledit deuxième moyen (103) formant antémémoire, ledit moyen de formation (101) est apte à examiner si ledit deuxième moyen (103) formant anté-mémoire a un espace suffisant, et si l'espace est insuffisant, ledit moyen de formation (101) est apte à supprimer des données appropriées pouvant être supprimées, de données de configuration de point pré-stockées dans ledit deuxième moyen (103) formant antémémoire, pour assurer un espace suffisant.

16. Appareil de traitement d'image selon la revendication 15, dans lequel ledit moyen de formation (101) est apte à supprimer des données de la fréquence d'accès la plus basse.

17. Appareil de traitement d'image selon la revendication 16, dans lequel ledit moyen de formation (101) est apte à déterminer la fréquence d'accès la plus basse sur la base d'un nombre d'accès dans un temps prédéterminé et/ou un temps écoulé depuis l'accès précédent.

18. Appareil de traitement d'image selon l'une quelconque des revendications 11 à 17, dans lequel lesdits premier et deuxième moyens (106, 103) formant antémémoire comprennent un support d'enregistrement ayant une capacité de mémoire fixe destinée à être divisée en fonction de quantités respectives nécessaires d'information.

19. Appareil de traitement d'image selon l'une quelconque des revendications 11 à 18, dans lequel ledit moyen de sortie (107) comprend une imprimante de type électrophotographique.

20. Appareil de traitement d'image selon l'une quelconque des revendications 11 à 17, dans lequel lesdits premier et deuxième moyens (106, 103) formant antémémoire sont des zones de mémoire d'un support d'enregistrement, attribuées de manière séparée et dynamique, en fonction de quantités respectives nécessaires d'information de mémoire.

21. Appareil de traitement d'image selon la revendication 20, dans lequel les premier et deuxième moyens (106, 103) formant antémémoire ont des priorités, et si le support d'enregistrement n'a pas d'espace suffisant pour stocker à nouveau les données de configuration de point, les zones de priorité la plus basse du support d'enregistrement sont libérées par les premier et deuxième moyens (106, 103) formant antémémoire.
